# EUROPEAN PATENT SPECIFICATION

(11) **EP 2 179 561 B1**
(45) Date of publication and mention of the grant of the patent: **05.09.2018**
(21) Application number: 08787715.5
(22) Date of filing: 22.07.2008
(51) Int. Cl.: H04L 29/06

(54) **NETWORK ACCESS FOR A VISITING USER**
NETZWERKZUGANG FÜR EINEN BESUCHENDEN BENUTZER
ACCÈS À UN RÉSEAU POUR UN UTILISATEUR VISITEUR

(30) Priority: 15.08.2007 FI 20075571
(43) Date of publication of application: 28.04.2010
(73) Proprietor: Elisa Oyj, 00520 Helsinki (FI)
(72) Inventor: JÄRVINEN, Jarkko, FI-00100 Helsinki (FI); PIRTTILÄ, Veli, FI-00260 Helsinki (FI); LEHTI, Panu, FI-06100 Porvoo (FI)
(74) Representative: Espatent Oy
(86) International application number: PCT/FI2008/050442
(87) International publication number: WO 2009/022052

(56) References cited:
- EP-A1- 1 320 236
- WO-A2-02/19593
- US-A1- 2002 037 708
- US-A1- 2006 074 814
- US-A1- 2006 236 105
- US-A1- 2007 079 135
- "LA FONERA User Manual", INTERNET CITATION, 26 July 2007 (2007-07-26), page 112pp, XP007912602, Retrieved from the Internet: URL:http://www.fon.com/images/media/common /m2201_1_01.pdf [retrieved on 2010-04-13]

## Description

Generally, the present invention relates to solutions enabling a visiting user to access the Internet on his or her terminal.

For years, Internet access has been possible not only on fixed terminals but also on wireless terminals. Different Internet operators currently provide several different access mechanisms enabling a user to access the Internet.

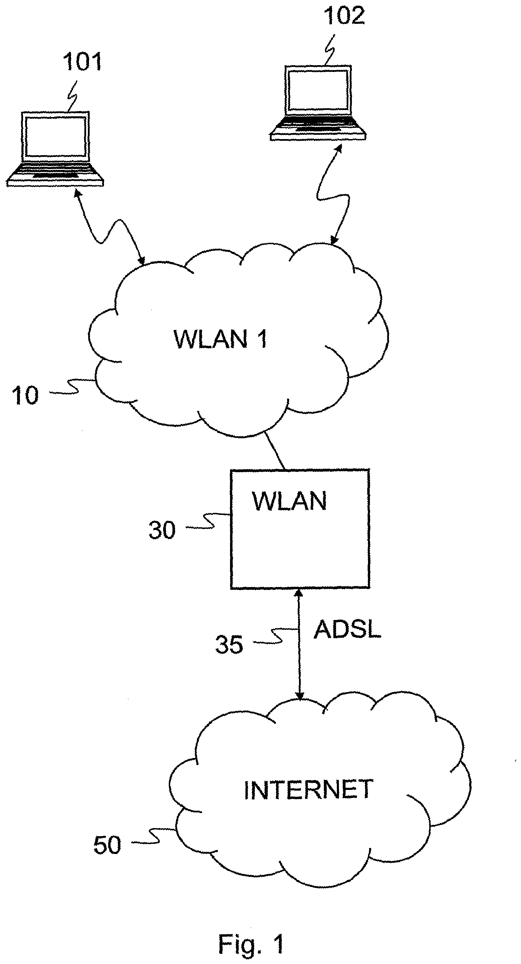

Figure 1 shows an example. In the figure, wireless terminals (e.g., laptop computers) 101 and 102 of an Internet user are connected to a base station 30 through a wireless local area network (e.g., WLAN). The base station may be in a modem device (e.g., an ADSL modem) that has a connection 35 to the Internet 50. Wireless local area networks may typically be configured so that registration either requires or does not require some kind of a password. In the latter case, the network is usually called open.

European patent application EP 1320236 A1 discloses access control for network services for authenticating a user via a separate link. Furthermore, the document LA FONERA +, User Manual, XP007912602, 26 July 2007 discloses a special kind of WiFi router to access the Internet.

The present invention discloses a novel solution enabling a visiting user to gain access to the Internet through a wireless short-range network.

The invention is carried out according to the appended claims. According to a first aspect of the invention, a method is implemented for a visitor in a wireless short-range network to be allowed to access the Internet in a system where the traffic of a holder of a base station of the wireless short-range network has been separated from the visitor's traffic, comprising:
intercepting a packet sent by a visiting terminal at a captive portal, the packet identifying the sender's address;
selecting or generating an identifier that pertains or is assigned to said address; generating a website on which the identifier is shown to the visitor;
receiving the identifier from the visitor via a mobile communication network; and opening access to the Internet for the address associated with the identifier.

Visitors' traffic may be routed in its own network separated in a data secure manner from the device owner's traffic.

In an embodiment of the invention, instructions on where or to which number to send the identifier are also shown in connection with showing the identifier. The visitor may send the identifier to the mobile communication network in a suitable message, e.g., a short message service message (or, more specifically, a text message).

In an embodiment of the invention, a network address translation (NAT) function is performed on the visitor's traffic, whereby a gray IP address of the visiting device is translated into a public IP address.

In an embodiment of the invention, the visitor's traffic is tunneled between said base station of a wireless short-range network and the captive portal, wherein the tunneling may be implemented with, for example, a virtual private network (VPN) connection operating in a NAT traversal operating mode. For example, the IPSec protocol or another suitable tunneling protocol can be used as the tunneling protocol. Tunneling protocols include PPTP/PPP/L2TP, for example.

In an embodiment of the invention, the wireless short-range network is a Wippies WLAN network.

In a method in accordance with an embodiment of the invention, a visiting user may open access to the Internet with a text message (e.g., through a WLAN network). In one such embodiment, an identifier for a "captive portal" is generated for the visitor. The visitor is automatically allowed to communicate with the Internet by sending the identifier to a correct number in a text message. In this case, the user needs no user name or passwords besides the text message, whereby the authentication process becomes significantly easier for the user. The user identification method, as such, is independent of the network, i.e., in principle, the user may be on any mobile telephone operator's network when sending the text message.

In accordance with a second aspect of the invention, a captive portal is implemented for a visitor in a wireless short-range network to be allowed to access the Internet in a system where the traffic of a holder of a base station of the wireless short-range network is separated from the visitor's traffic, comprising:
means for intercepting a packet sent by a visiting terminal, the packet identifying the sender's address;
means for selecting or generating an identifier and assigning the identifier to said address;
means for generating a website on which the identifier is shown to the visitor; means for receiving the identifier from the visitor via a mobile communication network; and
means for opening Internet access for the address associated with the identifier.

Herein, a "captive portal" refers to a device or server implementing captive portal functionality.

In accordance with a third aspect of the invention, a system according to claim 19 is implemented.

In accordance with a fourth aspect of the invention, a computer program is implemented, comprising a computer-executable program code that, when executed, controls a computerized apparatus to implement captive portal functionality performing a method in accordance with the first aspect.

The computer program in accordance with the fourth aspect may comprise a program code that is executable by any one of the following, for example: a general-purpose processor, a microprocessor, an application-specific integrated circuit, and a digital signal processor. The program code may be executable by a Linux computer, for example.

Some embodiments of the invention have only been or will only be described in connection with some aspects of the invention. However, as a rule, the corresponding embodiments are also applicable to other aspects as well.

The invention will be described in the following by way of example with reference to the appended drawings, wherein:
- Figure 1: shows a prior art system;
- Figure 2: shows a system in accordance with an embodiment of the invention;
- Figure 3: shows a method and a system for identifying visitors and opening access to the Internet in accordance with an embodiment of the invention; and
- Figure 4: is a block diagram of a device comprising captive portal functionality in accordance with an embodiment of the invention.

The same reference numbers are used in the figures to refer to the same subjects or elements. Figure 1 was discussed above in connection with prior art.

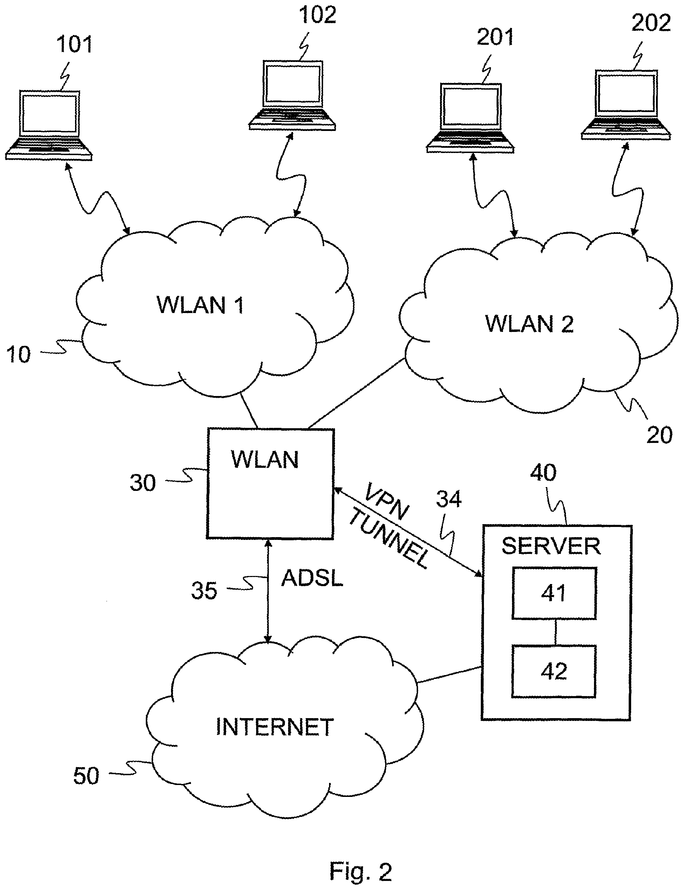

Figure 2 shows a system in accordance with an embodiment of the invention. As in Figure 1, wireless terminals (e.g., laptop computers 101 and 102) are connected to a base station 30 through a wireless short-range network (e.g., WLAN) 10. The base station 30 has a permanent connection (e.g., an ADSL connection) 35 to the Internet 50. The base station 30 is located in specific premises, such as the base station owner's home. The base station 30 may provide a plurality of subnetworks. A subnetwork 10 is the base station owner's private subnetwork through which the traffic of the terminals 101 and 102 is routed. In turn, a subnetwork 20 is an open network separate from the subnetwork 10 (different SSID identifiers are used in the subnetworks), enabling other terminals 201 and 202 visiting the area of the base station to have contact with the base station 30. Thus visitors' traffic is routed on their own network separated in a data secure manner from the actual device owner's traffic.

As an example of a service using a system as described above we mention Wippies, where the owner of base station of a wireless local area network (WLAN) may use his or her Internet connection on a number of computers or on any suitable WLAN device. At the same time, it is possible to share part of the Internet connection with other Wippies users potentially visiting the vicinity.

Wippies provides a data secure way of sharing part of one's own connection with other Wippies users. Wippies is designed so that if the owner needs bandwidth himself or herself, visitors will not prevent the owner from using the connection he or she needs. Visiting Wippies users use their own wireless Wippies LAN (the subnetwork 20) separated from the owner's private network (the subnetwork 10).

In the example shown in Figure 2, the base station owner's (or holder's) terminals 101 and 102 use the connection 35 to communicate with the Internet 50. In contrast, the traffic of visitors connected to the open network 20 is routed from the base station 30 over a virtual connection into a tunnel 34 (e.g., an IPSec VPN tunnel), whose one end point is the base station 30 and the other end point is a server 40 in the network, connected to the Internet 50. However, the tunneled traffic over the virtual connection typically uses the same physical connection as the owner's traffic, albeit separated from the owner's traffic. Server equipment comprises a captive portal 42, which may also be called a traffic capture portal and whose operation will be described below. The server equipment also typically comprises a virtual connection hub, in the VPN case shown in Figure 2, for example, a VPN hub 41 acting as a collector of different VPN connections and as one end point of the virtual connection tunnel. The captive portal 42 and the VPN hub 41 may be implemented in the same or different devices.

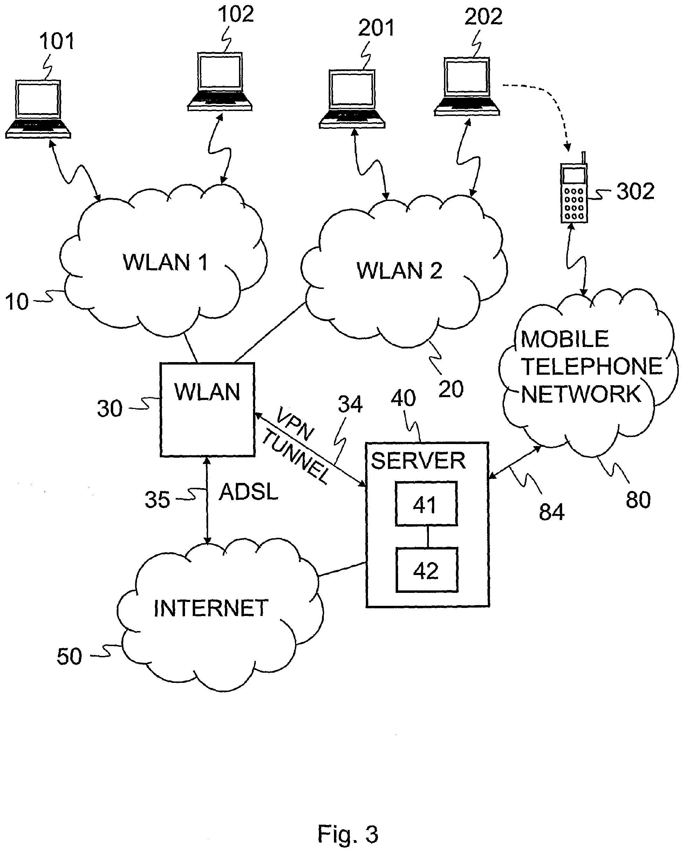

Figure 3 shows a method and system for identifying visitors and opening access to the Internet in accordance with an embodiment of the invention. A terminal 202 visiting a subnetwork 20 and a Wippies service are used as a non-limiting example.

When a customer (visitor) and his or her terminal (e.g., a laptop computer, a mobile station, or another WLAN device) enter the area of a Wippies visitor network 20, communication between devices becomes possible. The visitor network is an open network, so typically it is always possible for the terminal 202 to contact it. During contact, the terminal 202 requests a network address (e.g., an IP address) using a suitable protocol (e.g., the DHCP protocol). A base station 30 issues an IP address to the terminal. The IP address may be one of gray IP addresses distributed by a captive portal 42 to the base station 30 in advance, representing a unique address within a network controlled by the captive portal 42 (the network from the captive portal 42 towards the terminal 202).

When the terminal 202 attempts to communicate with the Internet, the base station opens a VPN tunnel 34 automatically from the user's point of view, whereby all of the visitor's traffic is automatically routed through a VPN hub 41 to the captive portal 42. Thus when the terminal 202 attempts to communicate with the Internet 50 (e.g., tries to open a connection to some WWW service), the captive portal 42 intercepts all transmitted packets and redirects the connection to a login page (the captive portal 42 opens a login page on the terminal 202) and does not allow the customer's traffic to propagate further before login.

Login is carried out using a message sent to a mobile communication network, e.g., a text message or another short message service message (in the following, a text message is used as an example). An identifier is shown to the visitor on the page generated by the captive portal. In addition, brief instructions may be provided on the page, indicating to which number the identifier may be sent, e.g., in a text message. Depending on the implementation, the captive portal 42 may use identifiers in various ways. For example, the captive portal 42 may have a certain number of identifiers in an "identifier pool", from which the captive portal 42 may select the identifier for the login page. Alternatively, the captive portal 42 may generate an identifier as necessary. The identifier may be generated, for example, from the visitor's IP address, on the basis of it, or in some other way. A certain identifier may previously have been linked to correspond to a specific gray IP address in the network controlled by the captive portal. Alternatively, the linking may be performed dynamically when selecting/generating the identifier. Further alternatively, the identifier may be shown to the visitor indirectly. In this case, the actual identifier is not shown in writing to the visitor; rather, only a hint is shown, on the basis of which the visitor will recognize the identifier and know how to send it in a message to a mobile communication network.

Upon receiving the identifier, the visitor sends the identifier in a text message (e.g., on his or her terminal 202 or another terminal (e.g., a cellular telephone/device 302)) to a predetermined number or a number shown on the login page. The text message is passed to a cellular telephone network 80. The cellular telephone network has a connection 84 to a system comprising the captive portal 42. The text message (or, depending on the implementation, only its contents or only information that a correct identifier has been sent to the mobile communication network 80 (even in such cases, the identifier may be considered to be passed to the captive portal 42)) is passed through the connection 84 to the captive portal 42, which will deduce the IP address with which the identifier is associated (this correspondence has previously been stored on the portal 42). Subsequently, the captive portal 42 opens access to the Internet 50 for the IP address in question. The visitor's traffic is routed through the VPN tunnel 34 and a server 40 to the Internet 50. When access to the Internet 50 has been opened, the customer can use the Internet normally on his or her terminal 202. The captive portal 42 typically performs an NAT function for outgoing and incoming packets from/to the terminal 202. In packets moving towards the Internet, the visitor's gray IP address is typically replaced by a public IP address of the captive portal 42. In packets moving in the opposite direction, the public IP address is replaced by the gray IP address. If the virtual connection tunnel has to traverse some other NAT (e.g., an ADSL modem or another firewall device) in the network controlled by the captive portal 42, a NAT Traversal operating method or similar is used for tunneling in accordance with an embodiment.

After a certain period has passed, the captive portal 42 may close the access to the Internet 50 and generate a new identifier on a page, sending which access may be opened again.

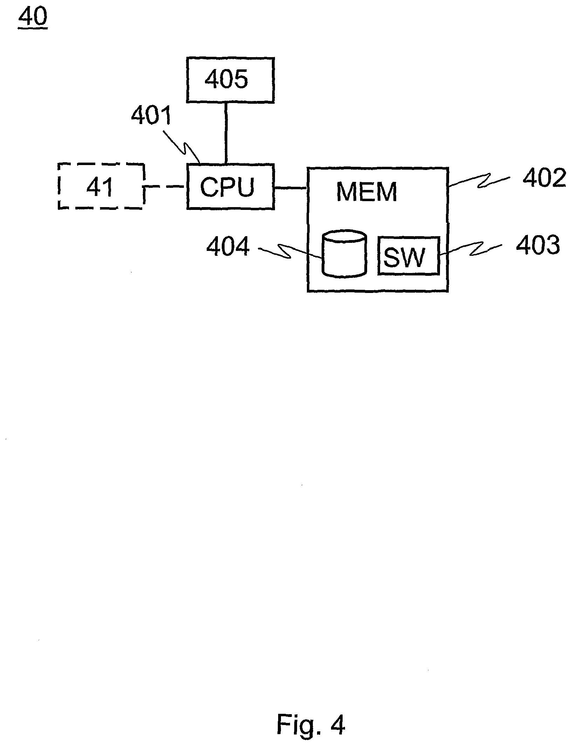

Figure 4 shows a block diagram of a captive portal device or a server comprising captive portal functionality. A device 40 comprises a processor 401 for controlling the operation of the device and a memory 402 comprising a computer program/software 403. The computer software 403 may comprise instructions for the processor to control the device 40, such as an operating system and various applications. In addition, the computer software 403 comprises a program code providing captive portal functionality. Depending on the implementation, the memory 402 comprises a database or a comparable data warehouse 404 for storing identifiers used in certain embodiments and IP addresses corresponding to them.

Furthermore, the device 40 comprises an input/output unit 405 that provides an interface for communication with a cellular mobile communication network. An identifier sent by a visitor to a mobile communication network 80, for example, is received through it. The interface may be a wired connection, for example. The device may also comprise a VPN hub 41 enabling communication in a tunneling manner with a base station 30 in a wireless short-range network.

## Claims

1. A method for a visitor (202) in a wireless short-range network to be allowed to access the Internet (50) in a system where the traffic of a holder of a base station (30) of the wireless short-range network is separated from the visitor's traffic, comprising:
intercepting a packet sent by a visiting terminal (202) at a captive portal (42), the packet identifying the sender's address;
**characterized by**
selecting or generating an identifier that pertains or is assigned to said address;
generating a website on which the identifier is shown to the visitor (202);
receiving the identifier from the visitor via a mobile telephone network (80); and
opening access to the Internet (50) for the address associated with the identifier.

2. A method as claimed in claim 1, wherein instructions on where or to which number to send the identifier are also shown in connection with showing the identifier.

3. A method as claimed in claim 1 or 2, wherein the identifier sent by the visitor is passed to the mobile telephone network (80) in a short message service message.

4. A method as claimed in any preceding claim, wherein said visitor's address is a gray IP address of a visiting device (202).

5. A method as claimed in claim 4, wherein a network address translation, NAT, function is performed on the visitor's traffic, whereby the gray IP address of the visiting device (202) is translated into a public IP address.

6. A method as claimed in any preceding claim, wherein the visitor's (202) traffic is tunneled (34) between said base station (30) of the wireless short-range network and the captive portal (42), and wherein
the tunneling (34) is implemented over a VPN connection operating in a NAT traversal operating mode, and/or
the tunneling (34) is implemented with a VPN IPSec tunnel.

7. A captive portal for a visitor (202) in a wireless short-range network to be allowed to access the Internet in a system where the traffic of a holder of a base station (30) of the wireless short-range network is separated from the visitor's traffic, comprising:
means (401) for intercepting a packet sent by a visiting terminal, the packet identifying the sender's address;
**characterized by**
means (401) for selecting or generating an identifier and assigning the identifier to said address;
means (401) for generating a website on which the identifier is shown to the visitor (202);
means (405) for receiving the identifier from the visitor (202) via a mobile telephone network (80); and
means (401) for opening Internet access for the address associated with the identifier.

8. A captive portal as claimed in claim 7, wherein the captive portal is also configured to show instructions on where or to which number to send the identifier in connection with showing the identifier.

9. A captive portal as claimed in claim 7 or 8, wherein the identifier sent by the visitor is passed to the mobile telephone network (80) in a short message service message.

10. A captive portal as claimed in any one of claims 7 to 9, wherein said visitor's address is a gray IP address of a visiting device (202).

11. A captive portal as claimed in claim 10, wherein the captive portal is also configured to execute a network address translation, NAT, function on the visitor's traffic, whereby the gray IP address of the visiting device (202) is translated into a public IP address.

12. A captive portal as claimed in any one of claims 7 to 11, wherein the captive portal (42) is also configured to tunnel (34) the visitor's traffic between said base station (30) of the short-range network and the captive portal (42), and wherein
the tunneling (34) is implemented over a VPN connection operating in a NAT traversal operating mode, and/or
the tunneling (34) is implemented with a VPN IPSec tunnel.

13. A captive portal as claimed in any one of claims 7 to 12, wherein the wireless short-range network is a Wippies WLAN network.

14. A system comprising a base station (30) of a wireless short-range network and a captive portal (42) in accordance with any one of claims 7 to 13.

15. A computer program comprising a computer-executable program code that, when executed, controls a computerized apparatus to carry out captive portal functionality performing a method in accordance with any one of claims 1 to 6.

## Patentansprüche

1. Verfahren für einen Besucher (202) in einem drahtlosen Kurzstreckennetzwerk, der Zugriff auf das Internet (50) in einem System erhalten soll, in dem der Traffic des Inhabers einer Basisstation (30) eines drahtlosen Kurzstreckennetzwerks von dem Traffic des Besuchers getrennt wird, umfassend:
Abfangen eines Pakets, das ein Besucherendgerät (202) sendet, an einem Captive Portal (42), wobei das Paket die Adresse des Absenders identifiziert;
**gekennzeichnet durch**
Auswahl oder Erzeugen einer Kennung, die sich auf diese Adresse bezieht oder dieser zugeordnet ist;
Erzeugen einer Website, auf der die Kennung dem Besucher (202) angezeigt wird;
Empfang der Kennung von dem Besucher über ein mobiles Telefonnetzwerk (80);
und
Öffnen des Zugangs zum Internet (50) für die Adresse, die mit der Kennung verbunden ist.

2. Verfahren nach Anspruch 1, wobei Anweisungen dazu, wohin oder an welche Nummer die Kennung zu senden ist, auch in Zusammenhang mit dem Anzeigen der Kennung dargestellt werden.

3. Verfahren nach Anspruch 1 oder 2, wobei die durch den Besucher gesendete Kennung in einer Short-Message-Service-Nachricht an das Mobilfunknetzwerk (80) weitergeleitet wird.

4. Verfahren nach einem der vorhergehenden Ansprüche, wobei die Adresse des Besuchers eine graue IP-Adresse einer Besuchervorrichtung (202) ist.

5. Verfahren nach Anspruch 4, wobei eine Netzwerkadresstranslationsfunktion NAT auf den Traffic des Besuchers angewendet wird, wodurch die graue IP-Adresse der Besuchervorrichtung (202) in eine öffentliche IP-Adresse umgewandelt wird.

6. Verfahren nach einem der vorhergehenden Ansprüche, wobei der Traffic des Besuchers (202) zwischen der Basisstation (30) des drahtlosen Kurzstreckennetzwerks und dem jeweiligen Captive Portal (42) getunnelt (34) wird, und wobei
das Tunneln (34) über eine VPN-Verbindung umgesetzt wird, die in einem NAT-Traversalbetriebsmodus läuft, und/oder
das Tunneln (34) mit einem VPN-IPSec-Tunnel umgesetzt wird.

7. Captive Portal für einen Besucher (202) in einem drahtlosen Kurzstreckennetzwerk, der Zugriff auf das Internet in einem System erhalten soll, in dem der Traffic des Inhabers einer Basisstation (30) eines drahtlosen Kurzstreckennetzwerks von dem Traffic des Besuchers getrennt wird, umfassend:
Mittel (401) zum Abfangen eines Pakets, das durch ein Besucherendgerät gesendet wird, wobei das Paket die Adresse eines Absenders identifiziert;
**gekennzeichnet durch**
Mittel (401) zur Auswahl oder Erzeugung einer Kennung und Zuweisung der Kennung zu dem Mittel;
Mittel (401) zum Erzeugen einer Website, auf der die Kennung dem Besucher (202) angezeigt wird;
Mittel (405) zum Empfang der Kennung von dem Besucher (202) über ein mobiles Telefonnetzwerk (80); und
Mittel (401) zum Öffnen des Internetzugangs für die Adresse, die mit der Kennung verknüpft ist.

8. Captive Portal nach Anspruch 7, wobei das Captive Portal auch konfiguriert ist, um Anweisungen dazu anzuzeigen, wohin oder an welche Nummer die Kennung in Zusammenhang mit der Anzeige der Kennung zu senden ist.

9. Captive Portal nach Anspruch 7 oder 8, wobei die durch den Besucher gesendete Kennung in einer Short-Message-Service-Nachricht an das Mobilfunknetzwerk (80) weitergeleitet wird.

10. Captive Portal nach einem der Ansprüche 7 bis 9, wobei die Adresse des Besuchers eine graue IP-Adresse einer Besuchervorrichtung (202) ist.

11. Captive Portal nach Anspruch 10, wobei das Captive Portal auch konfiguriert ist, um eine Netzwerkadresstranslationsfunktion NAT auf den Traffic des Besuchers anzuwenden, wodurch die graue IP-Adresse der Besuchervorrichtung (202) in eine öffentliche IP-Adresse umgewandelt wird.

12. Captive Portal nach einem der Ansprüche 7 bis 11, wobei das Captive Portal (42) außerdem konfiguriert ist, um den Traffic des Besuchers zwischen der Basisstation (30) des drahtlosen Kurzstreckennetzwerks und dem Captive Portal (42) zu tunneln (34), und wobei
das Tunneln (34) über eine VPN-Verbindung umgesetzt wird, die in einem NAT-Traversalbetriebsmodus läuft, und/oder
das Tunneln (34) mit einem VPN-IPSec-Tunnel umgesetzt wird.

13. Captive Portal nach einem der Ansprüche 7 bis 12, wobei das drahtlose Kurzstreckennetzwerk ein Wippies-WLAN-Netzwerk ist.

14. System bestehend aus einer Basisstation (30) eines drahtlosen Kurzstreckennetzwerks und einem Captive Portal (42) nach einem der Ansprüche 7 bis 13.

15. Computerprogramm, umfassend einen von einem Computer ausführbaren Programmcode, der bei Ausführung eine computerisierte Vorrichtung steuert, um die Funktion des Captive Portals auszuführen, und ein Verfahren nach einem der Ansprüche 1 bis 6 durchzuführen.

## Revendications

1. Procédé pour un visiteur (202) dans un réseau sans fil à courte portée devant être autorisé à accéder à l'Internet (50) dans un système où le trafic d'un détenteur d'une station de base (30) du réseau sans fil à courte portée est séparé du trafic du visiteur, comprenant de :
intercepter un paquet envoyé par un terminal visiteur (202) au niveau d'un portail captif (42), le paquet identifiant l'adresse de l'émetteur ; **caractérisé par**
sélectionner ou générer un identifiant qui se rapporte à ou est assigné à ladite adresse ;
générer un site Web sur lequel l'identifiant est montrer au visiteur (202) ;
recevoir l'identifiant à partir du visiteur via un réseau téléphonique mobile (80) ;
ouvrir l'accès à l'Internet (50) pour l'adresse associée à l'identifiant.

2. Procédé selon la revendication 1, dans lequel les instructions relatives à quel emplacement ou à quel numéro envoyer l'identifiant sont aussi montrées en liaison avec l'affichage de l'identifiant.

3. Procédé selon la revendication 1 ou 2, dans lequel l'identifiant envoyé par le visiteur est passé au réseau téléphonique mobile (80) dans un message de service de messages courts.

4. Procédé selon une quelconque des revendications précédentes, dans lequel ladite adresse de visiteur est une adresse IP grise d'un dispositif visiteur.

5. Procédé selon la revendication 4, dans lequel une fonction de traduction d'adresse de réseau, NAT, est exécutée sur le trafic du visiteur, moyennant quoi l'adresse IP grise du dispositif de visiteur (202) est traduite en une adresse IP publique.

6. Procédé selon une quelconque des revendications précédentes, dans lequel le trafic du visiteur (202) est tunnelisé (34) entre ladite station de base (30) du réseau sans fil à courte portée et le portail captif (42) et dans lequel la tunnelisation (34) est implémentée via une connexion VPN fonctionnant dans un mode d'exploitation transversal NAT, et/ou la tunnelisation (34) est implémentée avec un tunnel VPN Ipsec.

7. Portail captif pour un visiteur (202) dans un réseau sans fil à courte portée devant être autorisé à accéder à l'Internet dans un système où le trafic d'un détenteur d'une station de base (30) du réseau sans fil à courte portée est séparé du trafic du visiteur, comprenant :
un moyen (401) pour intercepter un paquet envoyé par un terminal visiteur au niveau d'un portail captif, le paquet identifiant l'adresse de l'émetteur ; **caractérisé par**
un moyen (401) pour sélectionner ou générer un identifiant qui se rapporte à ou est assigné à ladite adresse ;
un moyen (401) pour générer un site Web sur lequel l'identifiant est montré au visiteur (202) ;
un moyen (405) pour recevoir l'identifiant à partir du visiteur (202) via un réseau téléphonique mobile (80) ;
un moyen (401) pour ouvrir l'accès à l'Internet pour l'adresse associée à l'identifiant.

8. Portail captif selon la revendication 7, dans lequel le portail captif est aussi configuré pour afficher des instructions relatives à quel emplacement ou à quel numéro envoyer l'identifiant en liaison avec l'affichage de l'identifiant.

9. Portail captif selon la revendication 7 ou 8, dans lequel l'identifiant envoyé par le visiteur est passé au réseau téléphonique mobile (80) dans un message de service de messages courts.

10. Portail captif selon une quelconque des revendications 7 à 9, dans lequel ladite adresse visiteur est une adresse IP grise d'un dispositif visiteur (202).

11. Portail captif selon la revendication 10, dans lequel le portail captif est aussi configuré pour exécuter une fonction de traduction d'adresse de réseau, NAT, sur le trafic du visiteur, moyennant quoi l'adresse IP grise du dispositif visiteur (202) est traduite en une adresse IP publique.

12. Portail captif selon une quelconque des revendications 7 à 11, dans lequel le portail captif (42) est aussi configuré pour tunneliser (34) le trafic du visiteur entre ladite station de base (30) du réseau à courte portée et le portail captif (42) et dans lequel la tunnelisation (34) est implémentée via une connexion VPN fonctionnant dans un mode d'exploitation transversal NAT, et/ou
la tunnelisation (34) est implémentée avec un tunnel VPN Ipsec.

13. Portail captif selon une quelconque des revendications 7 à 12, dans lequel le réseau sans fil à courte portée est un réseau WLAN Wippies.

14. Système comprenant une station de base (30) d'un réseau sans fil à courte portée et un portail captif (42) selon une quelconque des revendications 7 à 13.

15. Programme informatique comprenant un code de programme exécutable par ordinateur qui, lorsqu'il est exécuté, commande un dispositif informatisé afin d'exécuter une fonctionnalité de portail captif mettant en oeuvre un procédé selon une quelconque des revendications 1 à 6.
